# EUROPÄISCHE PATENTSCHRIFT

(11) **EP 1 017 265 B1**
(45) Veröffentlichungstag und Bekanntmachung des Hinweises auf die Patenterteilung: **20.11.2002**
(21) Anmeldenummer: 98950079.8
(22) Anmeldetag: 24.09.1998
(51) Int. Cl.: A01G 13/02

(54) **PFLANZENSCHUTZMATTE, INSBESONDERE IN GESTALT EINER LOCHSCHEIBE**
PLANT PROTECTION MAT, ESPECIALLY IN THE FORM OF A PERFORATED DISK
MAT DE PROTECTION VEGETALE, NOTAMMENT SOUS LA FORME D'UN DISQUE PERFORE

(30) Priorität: 26.09.1997 DE 29717422 U
(43) Veröffentlichungstag der Anmeldung: 12.07.2000
(73) Patentinhaber: Böhringer, Eberhard, 27211 Bassum (DE)
(72) Erfinder: Böhringer, Eberhard, 27211 Bassum (DE)
(74) Vertreter: Busse, Dietrich, Dipl.-Ing.
(86) Internationale Anmeldenummer: EP9806088
(87) Internationale Veröffentlichungsnummer: WO99016297

(56) Entgegenhaltungen:
- DE-A- 2 537 056
- DE-U- 29 709 199
- DE-U- 29 717 422
- FR-A- 2 590 763
- FR-A- 2 609 234
- FR-A- 2 705 862
- GB-A- 1 381 679
- US-A- 5 396 731

## Beschreibung

Die Erfindung bezieht sich auf eine Pflanzenschutzmatte, insbesondere in Gestalt einer Lochscheibe gemäß dem Oberbegriff des Anspruchs 1.

Bekannte Pflanzenschutzmatten (DE 2537056 C3) in Form von Lochscheiben sind als Bodenabdeckung oberhalb der Wurzelballen von Pflanzungen vorgesehen, wobei die Abdeckmatten mit einer Jute- und Kokosfasern aufweisenden Filzschicht und einer zusätzlichen Gewebeschicht als zweilagige Teile ausgebildet und diese durch zusätzlich erforderliches Steppen oder Vernadeln verbunden sind, so daß der Herstellungsaufwand nachteilig erhöht ist. Die unterschiedlichen Materialien der Abdeckmatten verursachen außerdem bei deren Entsorgung einen nachteilig hohen Aufwand.

Die Erfindung befaßt sich mit dem Problem, eine Pflanzenschutzmatte, insbesondere in Form einer Lochscheibe, zu schaffen, die mit geringem Material- und Kostenaufwand in weitgehend beliebiger Größe herstellbar ist, eine hinreichend langzeitstabile Struktur aufweist, damit wiederholt als wasserspeicherndes sowie lichtundurchlässiges Schutzelement anwendbar ist und einfache Entsorgung ermöglicht.

Die Erfindung löst diese Aufgabe durch eine Pflanzenschutzmatte mit den Merkmalen des kennzeichnenden Teils des Anspruchs 1. Hinsichtlich wesentlicher weiterer Ausgestaltungen wird auf die Ansprüche 2 bis 9 verwiesen.

Die Pflanzenschutzmatte gemäß der Erfindung ist als ein nur aus Kokosfasern und Latex bestehender Formkörper gefertigt, dessen an einem konturbildenden Aussteifungsrand fixierte Kokosfasern im Verbund mit den Latexteilen des Kokosvlieses jeweilige insgesamt lichtdichte und zumindest bereichsweise flüssigkeitsspeichernde Deckzonen mit die Brauchbarkeit der Matte verbessernden Porenstrukturen bilden. Dabei ist der Formkörper gut handhabbar, bleibt auch unter rauhen Einsatzbedingungen formstabil und ermöglicht bei hinreichender Verrottungsfestigkeit eine mehrmalige sowie langzeitstabile Anwendung der Lochscheiben mit weitgehend beliebigen Abmessungen und Umfangskonturen. Die Entsorgung derartiger Pflanzenschutzmatten ist überaus einfach, da deren Latex- und Kokosfaserbestandteile vollständig verrottungsfähig sind und damit die Matten mit geringem Aufwand einer Zerkleinerung und Kompostierung zugeführt werden können.

Das zur Herstellung der Pflanzenschutzmatte vorgesehene Kokosvlies kann vorteilhaft aus unsortiert verarbeiteten Kokosfasern bestehen, die über eine Nadelwalze o. dgl. aus einem Rohballen aufgelockert, herausgelöst und unter Schwerkraftwirkung einem Transportband so zugeführt werden, daß in einer als Zwischenprodukt vorgesehenen Kokosfaservlies-Bahn jeweils kürzere Kokosfaserteile eine untere Zone und längere Kokosfaserteile eine obere Zone der Faservliesbahn bilden. Die Faservliesbahn wird mit dem Bindemittel (Latex) besprüht, so daß im Bahnquerschnitt eine ungeordnete Verbindung der Vliesteile gebildet ist. In zweckmäßiger Ausführung sind dabei die zugeführten Gewichtsanteile von Kokosfaserteilen und der Latexmischung gleich bemessen, d. h. es werden jeweils 50 % anteilig bei der Vliesbahnbildung zugeführt.

In einem kontinuierlichen Durchlauf mit kurzer Verweilzeit wird danach diese Faservließbahn einem mittels eines Stanzwerkzeuges durchgeführten Trennvorgang zugeführt, wobei in einem Stanzhub gleichzeitig mehrere der Lochscheiben aus der Faservliesbahn herausgetrennt werden können. Bei diesem Trennvorgang erfolgt eine Formung des konturbildenden Aussteifungsrandes, in dessen Bereich sich die Kokosfasern und die bis zu diesem Zeitpunkt nicht ausgehärteten Latexbestandteile unter Schnittkraftwirkung so verfestigen, daß danach diese ausgesteiften Ränder den Lochscheiben eine vorteilhafte Konturstabilität vermitteln. Gleichzeitig werden in der unterseitigen und der oberseitigen Deckzone die jeweils unterschiedliche Öffnungsweiten bildenden Porenstrukturen durch eine Verdichtung der Kokosfaser-Latex-Verbindung geformt, wobei die aus der Faservließbahn herausgestanzten Lochscheiben bis auf ca. 30 % der Ausgangshöhe des Kokosvlieses zusammengepreßt sein können.

In zweckmäßiger Ausführung kann die Lochscheibe auch aus zwei im Bereich der Aussteifungsränder verbundenen Kokosvlies-Lagen gefertigt werden, wobei die in Gebrauchsstellung untere Kokosvlies-Lage bereits über einen vor dem Ausstanzvorgang erfolgenden Preßvorgang als eine verfestigte Faservliesbahn bereitgestellt wird und diese die untere Deckzone mit vergleichsweise geringen Öffnungsweiten bildet. Über diese Kokosvlies-Lage wird die aus locker verbundenen Kokosfasern und Latex bestehende zweite bahnförmige Kokosvlies-Lage gelegt und danach erfolgt der gemeinsame Trenn- bzw. Ausstanzvorgang, so daß eine konturstabile Lochscheibe mit den zwei Deckzonen erreicht ist.

Bei der vorbeschriebenen Herstellung der Lochscheiben erfolgt auch der Trennvorgang zur Bildung des ausgehend vom Mittelloch vorgesehenen Radialschlitzes, wobei mit einem Arbeitshub der Stanzvorrichtung die Kontur der Scheibe, das Mittelloch und der Radialschlitz erzeugt werden und damit der Herstellungsaufwand überaus gering ist.

Weitere Einzelheiten und Vorteile der Erfindung ergeben sich aus der nachfolgenden Beschreibung und der Zeichnung, die mehrere Ausführungsformen der erfindungsgemäßen Pflanzenschutzmatte in Form einer Lochscheibe näher veranschaulicht. In der Zeichnung zeigen:
- Fig. 1: eine Draufsicht auf eine erfindungsgemäße Pflanzenschutzmatte mit kreisförmiger Außenkontur,
- Fig. 2: eine Schnittdarstellung gemäß einer Linie II-II in Fig. 1,
- Fig. 3: eine Draufsicht der Pflanzenschutzmatte ähnlich Fig. 1 mit einer rechteckigen Außenkontur der Lochscheibe, und
- Fig. 4: eine Prinzipdarstellung des Ausstanzvorganges bei der Herstellung der Lochscheibe.

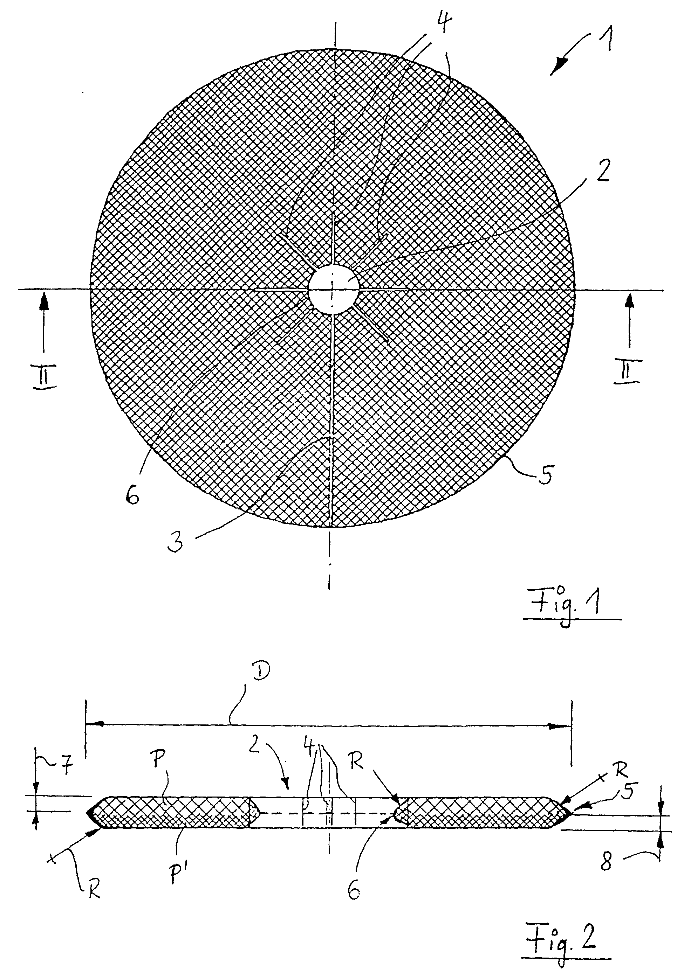

In Fig. 1 ist eine in Gestalt einer Lochscheibe 1 geformte Pflanzenschutzmatte in einer Draufsicht dargestellt, wobei innerhalb deren kreisringförmiger Umfangskontur (Durchmesser D) ein Mittelloch 2 sowie von diesem ausgehende radiale Schlitze 3 und 4 deutlich werden. Der durchgehende Schlitz 3 ermöglicht dabei die Positionierung der Lochscheibe 1 in ihrer Gebrauchsstellung oberhalb des Wurzelballens einer Pflanze, die im Bereich des Mittelloches 2 umfaßt wird, so daß der umgebende Wurzelballen abgedeckt ist. Über die kurzen Schlitze 4 ist eine Anpassung an unterschiedliche Pflanzendurchmesser erreicht.

Die erfindungsgemäß ausgebildete Lochscheibe 1 ist aus einem nur Kokosfasern und Latex aufweisenden Kokosvlies geformt, wobei die Kokosfasern der Lochscheibe 1 einerseits im Bereich sämtlicher konturbildender Aussteifungsränder 5,6 fixiert sind und andererseits im Bereich oberseitiger und unterseitiger Deckzonen 7,8 eine jeweils unterschiedliche Öffnungsweiten aufweisende Porenstrukturen P,P' bilden.

Die Lochscheibe 1 weist in technologisch zweckmäßiger Ausführung im Bereich der unterseitigen Deckzone 8 im wesentlichen kurze Kokosfasern und im Bereich der oberseitigen Deckzone 7 im wesentlichen lange Kokosfasern auf, wobei diese Fasern über beide Zonen verhakt sind und mit dem ebenfalls verbindenden Latex-Bestandteilen dichte Strukturen schaffen, die lichtundurchlässige und flüssigkeitsspeichernde Eigenschaften aufweisen.

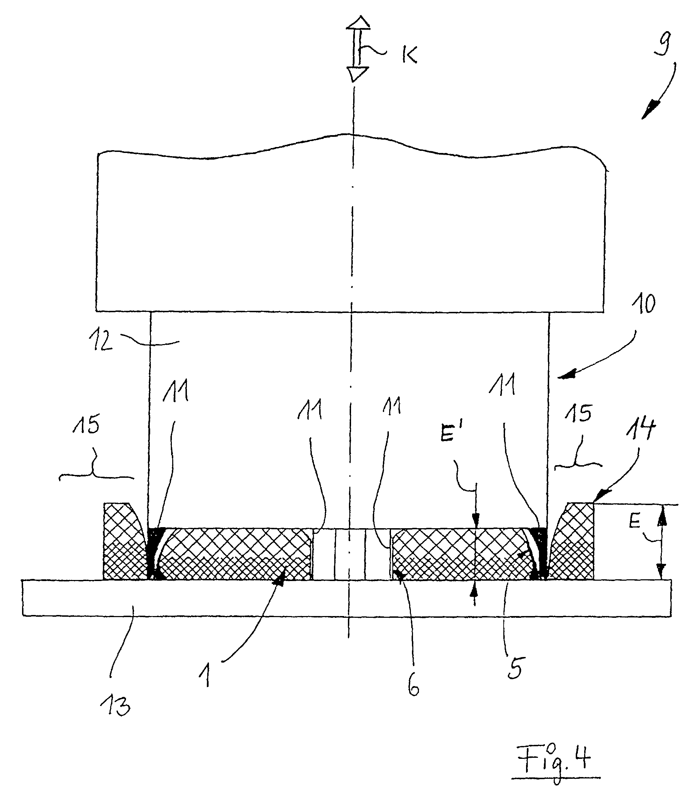

Ausgangsmaterial bei der Herstellung der Lochscheibe 1 ist eine Kokos-Faservliesbahn 14 (Fig. 4) mit kostengünstig unsortiert verarbeiteten Kokosfasern, die beispielsweise mittels einer Nadelwalze o. dgl. aus einem Rohballen herausgefördert und im freien Fall ungeordnet so auf eine Transporteinheit gelangen, daß optimiert für das vorgesehene Endprodukt (Lochscheibe) jeweilige kurze Kokosfaserteile auf der Transporteinheit bodenseitig konzentriert sind und die langen Kokosfaserteile im oberen Schichtbereich der Faservliesbahn 14 verbleiben. Bei Erzeugung dieser Faservliesbahn wird kontinuierlich eine Latexmischung als Bindemittel so zugeführt, daß anteilig jeweils 50 Gew.% Fasern und 50 Gew.% Bindemittel in der Faservliesbahn verteilt sind. Im Bedarfsfall ist eine beliebige Variation dieser Anteile möglich, so daß kundenspezifisch angepaßte Lochscheiben 1 mit unterschiedlichem Flächengewicht bereitgestellt werden.

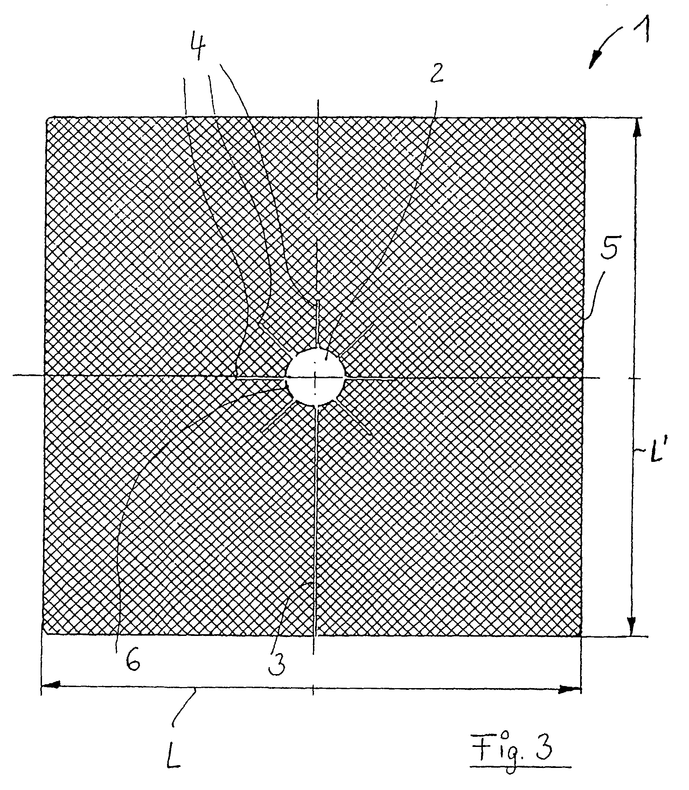

Dieses Kokosvlies in Form der Faservliesbahn 14 wird einer Flächenstanze 9 (Fig. 4) zugeführt, die in zweckmäßiger Ausführung mit einem mehrfach nutzbaren Stanzwerkzeug 10 versehen ist, das eine jeweilige Konturform der Lochscheibe 1 über Stanzmesserlinien 11 vorgibt. Diese Stanzmesserlinien 11 sind im Bereich der oberen Stützplatte 12 entsprechend der vorgesehenen Umfangskontur D (Fig. 1) bzw. L,L' (Fig. 3) in Konturnuten abgestützt, in deren Bereich mit geringem Umrüstaufwand eine schnelle Anpassung an kunden- und anwendungsspezifische Konturänderungen möglich ist.

Bei einem Arbeitshub (Pfeil K, Fig. 4) wird die Stützplatte 12 mit den Stanzmesserlinien 11 zu einer Grundplatte 13 hin nach unten bewegt und das eine Ausgangshöhe E aufweisende Kokosvlies wird, bei gleichzeitiger vollflächiger Pressung auf die Höhe E', im Bereich der Umfangskontur 5 bzw. des Lochrandes 6 durchtrennt, so daß danach in diesen Bereichen die Aussteifungsränder (Fig. 1) gebildet sind. Nach Durchführung dieses Sbanzhubes K werden die Lochscheibe 1 und das als ein Stanzgitter verbleibende Restmaterial 15 aus der Flächenstanze 9 heraustransportiert und das Restmaterial 15 kann aufgearbeitet und als Ausgangsmaterial weiterverwendet werden, so daß eine vollständige Verarbeitung der Rohballen erreicht ist.

Die vorbeschriebene Herstellung verdeutlicht, daß die Lochscheibe 1 im Bereich ihrer Umfangskonturen 5, des Lochrandes 6, ihres Mittelloches 2 und der radialen Schlitze 3,4 gleichzeitig bei dem Trennvorgang geformt ist und damit in diesen Bereichen gleichzeitig sowohl die Pressung als auch ein die Aushärtung der Latex-Kokosfaser-Mischung bewirkender Schneidvorgang erfolgt. Die Mattenbestandteile sind danach randseitig nach Art einer Verklebung belastungsstabil fixiert. Diese kontursteife Lochscheibe 1 kann beim bestimmungsgemäßen Gebrauch in den Porenstrukturen Wasser aufnehmen, gleichzeitig jedoch ist ein ungewollt weites Aufquellen oder Aufreißen der Matte durch die Bindungsfestigkeit in den Aussteifungsränder 5,6 langzeitstabil vermieden und auch nach einem späteren Lösen der Verbindungsstruktur im Bereich der Ränder 5,6 bleibt die schützende Wirkung der Lochscheibe 1 insgesamt erhalten.

In einer weiteren Ausführung ist denkbar, daß die Lochscheibe 1 aus mehreren, im Anwendungszweck weitgehend den Deckzonen 7,8 entsprechenden Kokosvlies-Lagen besteht, die ihrerseits auch aus jeweiligen vorgefertigten Faservliesbahnen 14 gebildet sind. Die in Gebrauchsstellung untere Kokosvlies-Lage 8 besteht dabei aus einer vorverdichteten Faservliesbahn, auf die eine unverdichtete Faservliesbahn aufgelegt wird. Danach kann die Lochscheibe 1 über einen gemeinsamen Trennvorgang entsprechend dem vorbeschriebenen Stanzen geformt werden und die beiden Ausgangs-Lagen sind danach integraler Bestandteil der zweilagigen Lochscheibe.

Bei der Verwendung der erfindungsgemäßen Lochscheiben 1 als Bodenabdeckung ist mit den Deckzonen 7,8 eine hinreichend lichtundurchlässige Struktur wirksam, die einen Unkrautwuchs verhindern kann und gleichzeitig bildet die dichtere Porenstruktur P' im Bereich der unteren Deckzone 8 sowohl einen Verdunstungsschutz als auch ein Flüssigkeits- und/oder Nährstoffreservoir. Das Flächengewicht der Lochscheiben 1 ist vorteilhaft so bemessen, daß insbesondere bei deren Anwendung auf leichten Böden, Kultursubstraten o. dgl. eine Winderosion im Bereich der Wurzelballen vermieden ist.

Für eine Verbesserung der Langzeitstabilität der Lochscheibe 1 kann diese zweckmäßig nach der Durchführung des vorbeschriebenen Stanzvorgangs einer Vulkanisierung zugeführt werden, so daß danach über die Verbindungen der Latexteile mit den Kokosfasern die Lochscheibe 1 bei vorteilhaften Federeigenschaften eine verbesserte Langzeitstabilität aufweist, die Reißfestigkeit insbesondere im Bereich der Schlitze 4 erhöht ist und die Handhabung der Lochscheibe 1 auch bei wiederholtem Einsatz an unterschiedlichen Pflanzkulturen erleichtert ist. Die Entsorgung der Lochscheiben 1 ist problemlos, da diese mit geringem Aufwand zerkleinert und einem biologischen Verrottungsvorgang zugeführt werden können.

Die Lochscheibe 1 ist im Bereich ihrer Kontur-Abmessungen D;L,L' mit geringem Aufwand an entsprechende Öffnungsdurchmesser von Pflanzgefäßen o. dgl. anpaßbar, so daß diese im Bereich des Wurzelballens vollflächig abgedeckt sind. Ebenso ist denkbar, für dekorative Anwendungszwecke die im Bereich der Deckzone 8 sichtbare Oberfläche der Lochscheibe 1 mit beispielsweise einer Farbgebung, Werbeaufschrift, Namensprägung o. dgl. optisch ansprechend zu gestalten oder dem Nutzer unmittelbar Informationen über den Gebrauch der Lochscheibe 1 zu vermitteln.

## Patentansprüche

1. Pflanzenschutzmatte, insbesondere in Gestalt einer Lochscheibe (1), die in Gebrauchsstellung oberhalb des Wurzelballens einer Pflanze als Bodenabdeckung vorgesehen ist, **dadurch gekennzeichnet, daß** die Lochscheibe (1) aus einem durch Latex verbundene Kokosfasern aufweisenden Kokosvlies geformt ist, wobei die Kokosfasern der Lochscheibe (1) einerseits über konturbildende Aussteifungsränder (5,6) fixiert sind und andererseits im Bereich oberseitiger und unterseitiger Deckzonen (7,8) Porenstrukturen (P,P') mit jeweils unterschiedlicher Öffnungsweite bilden.

2. Pflanzenschutzmatte nach Anspruch 1, **dadurch gekennzeichnet, daß** die Lochscheibe (1) über einen die Aussteifungsränder (5,6) formenden Trennvorgang aus einer Kokosvlies-Lage gebildet ist.

3. Pflanzenschutzmatte nach Anspruch 1 und 2, **dadurch gekennzeichnet, daß** die Lochscheibe (1) im Bereich der unterseitigen Deckzone (8) im wesentlichen kurze Kokosfasern und im Bereich der oberseitigen Deckzone (7) im wesentlichen lange Kokosfasern aufweist.

4. Pflanzenschutzmatte nach Anspruch 1, **dadurch gekennzeichnet, daß** die Lochscheibe (1) aus mehreren Kokosvlies-Lagen gebildet ist.

5. Pflanzenschutzmatte nach Anspruch 4, **dadurch gekennzeichnet, daß** die Lochscheibe (1) eine in Gebrauchsstellung untere Kokosvlies-Lage mit vorverdichteter Faserstruktur aufweist, auf dieser die unverdichtete obere Kokosvlies-Lage vor dem Trennvorgang aufgelegt ist und diese beiden Lagen nach dem Trennvorgang verpreßt sind.

6. Pflanzenschutzmatte nach einem der Ansprüche 1 bis 5, **dadurch gekennzeichnet, daß** die Lochscheibe (1) im Bereich ihrer Umfangskontur (D;L,L'), ihres zumindest einen Mittelloches (2) und zumindest eines von diesem ausgehenden radialen Schlitzes (3,4) gleichzeitig bei dem Trennvorgang geformt ist.

7. Pflanzenschutzmatte nach einem der Ansprüche 1 bis 6, **dadurch gekennzeichnet, daß** die eine oder mehrere Kokosvlies-Lage(n) aufweisende Lochscheibe (1) aus einer oder mehreren Faservliesbahnen (14) ausgestanzt ist.

8. Pflanzenschutzmatte nach einem der Ansprüche 1 bis 7, **dadurch gekennzeichnet, daß** die oberseitige und die unterseitige Porenstruktur (P,P') der Lochscheibe (1) jeweils von unterschiedlichen Anteilen an Latex und/oder Kokosfasern in der bzw. den Kokosvlies-Lage(n) gebildet sind.

9. Pflanzenschutzmatte nach einem der Ansprüche 1 bis 7, **dadurch gekennzeichnet, daß** die Lochscheibe (1) vulkanisiert ist.

## Claims

1. Plant protection mat, particularly in the form of a perforated disk (1) which when in the position of use is placed above the root ball of a plant as ground cover, **characterised in that** the perforated disk (1) is formed of a fleece of coconut fibres joined together with latex, whereby the coconut fibres of the perforated disk (1) are fixed on the one hand with contour-forming stiffening edges (5,6) and on the other hand form a porous structure (P, P') with different opening widths in the area of the upper and lower cover zones (7,8).

2. Plant protection mat in accordance with claim 1 **characterised in that** the perforated disk (1) is formed from a coconut fleece by means of a separating procedure which forms the stiffening edges (5, 6).

3. Plant protection mat in accordance with claims 1 and 2, **characterised in that** the perforated disk exhibits basically short coconut fibres in the area of the lower covering zone (8) and basically long coconut fibres in the area of the upper covering zone (7).

4. Plant protection mat in accordance with claim 1, **characterised in that** the perforated disk (1) is formed from several layers of coconut fibre fleece.

5. Plant protection mat in accordance with claim 4, **characterised in that** when in the position of use the perforated disk (1) exhibits a lower layer of coconut fibre fleece with pre-compressed fibre structure upon which the uncompressed upper layer of coconut fibre fleece is laid prior to the separating procedure and the two layers are pressed together after the separating procedure.

6. Plant protection mat in accordance with one of the claims 1 to 5, **characterised in that** the perforated disk (1), in the area of its peripheral contour (D; L, L'), is formed simultaneously in the separating procedure with at least one central hole (2) and at least one radial cut (3, 4) extending outwards from the latter.

7. Plant protection mat in accordance with one of claims 1 to 6, **characterised in that** the perforated disk exhibiting single or several layers of coconut fibre fleece is stamped out of a single or multi-layer fibre fleece 14.

8. Plant protection mat in accordance with one of claims 1 to 7, **characterised in that** the porous structure (P, P') of the upper and lower side of the perforate disk (1) is formed by different proportions of latex and / or coconut fibre in the coconut fibre fleece(s).

9. Plant protection mat in accordance with one of claims 1 to 7, **characterised in that** the perforated disk (1) is vulcanised.

## Revendications

1. Mat de protection de végétaux, en particulier sous la forme d'un disque perforé (1), qui est prévu comme recouvrement de sol en position d'utilisation au-dessus de la motte adhérant aux racines d'une plante, **caractérisé en ce que** le disque perforé (1) est formé d'un voile de coco présentant des fibres de coco liées par un latex, les fibres de coco du disque perforé (1), d'une part, étant solidarisées via des bords de renforcement (5, 6) formant un contour et, d'autre part, formant, dans la zone des surfaces de couverture supérieure et inférieure (7, 8), des structures poreuses (P, P') avec des largeurs d'ouvertures respectivement différentes.

2. Mat de protection de végétaux selon la revendication 1, **caractérisé en ce que** le disque perforé (1) est formé à partir d'une couche de voile de coco par une opération de séparation façonnant les bords de renforcement (5, 6).

3. Mat de protection de végétaux selon la revendication 1 ou 2, **caractérisé en ce que** le disque perforé (1) présente des fibres de coco sensiblement courtes dans la zone de la surface de couverture inférieure (8) et des fibres de coco sensiblement longues dans la zone de la surface de couverture supérieure (7).

4. Mat de protection de végétaux selon la revendication 1, **caractérisé en ce que** le disque perforé (1) est formé à partir de plusieurs couches de voile de coco.

5. Mat de protection de végétaux selon la revendication 4, **caractérisé en ce que** le disque perforé (1) présente une couche de voile de coco inférieure en position d'utilisation avec une structure fibreuse pré-compactée, la couche de voile de coco supérieure non compactée est appliquée sur celle-ci avant l'opération de séparation et ces deux couches sont pressées après l'opération de séparation.

6. Mat de protection de végétaux selon l'une quelconque des revendications 1 1 à 5, **caractérisé en ce que** le disque perforé (1) est formé simultanément lors de l'opération de séparation dans la zone de son contour périphérique (D;L,L'), de son au moins un trou central (2) et d'au moins une fente radiale (3,4) partant de celui-ci.

7. Mat de protection de végétaux selon l'une quelconque des revendications 1 1 à 6, **caractérisé en ce que** le disque perforé (1) présentant la ou les couches de voile de coco est matricé dans une ou plusieurs bandes de voile de fibres.

8. Mat de protection de végétaux selon l'une quelconque des revendications 1 à 7, **caractérisé en ce que** la structure poreuse supérieure et la structure poreuse inférieure (P,P') du disque perforé (1) sont formées respectivement de différentes fractions de latex et/ou de fibres de coco dans la ou les couches de voile de coco.

9. Mat de protection de végétaux selon l'une quelconque des revendications 1 1 à 7, **caractérisé en ce que** le disque perforé (1) est vulcanisé.
